Europäisches Patentamt

European Patent Office

Office européen des brevets

(19)

(11) Veröffentlichungsnummer : **0 330 861 B1**

(12) # EUROPÄISCHE PATENTSCHRIFT

(45) Veröffentlichungstag der Patentschrift :
04.09.91 Patentblatt 91/36

(51) Int. Cl.$^5$ : **B60J 1/17**

(21) Anmeldenummer : **89102002.6**

(22) Anmeldetag : **06.02.89**

(54) Gleitstück für Fensterführungen von Kraftfahrzeugen.

(30) Priorität : **27.02.88 DE 3806255**

(43) Veröffentlichungstag der Anmeldung :
**06.09.89 Patentblatt 89/36**

(45) Bekanntmachung des Hinweises auf die
Patenterteilung :
**04.09.91 Patentblatt 91/36**

(84) Benannte Vertragsstaaten :
**DE ES FR GB IT**

(56) Entgegenhaltungen :
**EP-A- 0 087 879**
**EP-A- 0 131 959**
**EP-A- 0 158 334**
**DE-A- 3 631 945**

(73) Patentinhaber : **AUDI AG**
**Auto-Union-Strasse 1 Postfach 220**
**W-8070 Ingolstadt (DE)**

(72) Erfinder : **Haldenwanger, Hans Günther**
**Behaimstrasse 16 a**
**W-8070 Ingolstadt (DE)**
Erfinder : **Rotte, Manfred**
**Am Fort 35 a**
**W-8070 Ingolstadt (DE)**
Erfinder : **Klose, Peter, Dr.**
**Im Wolfsgarten 4**
**W-8520 Erlangen (DE)**

(74) Vertreter : **Engelhardt, Harald**
**AUDI AG Patentabteilung Postfach 220**
**W-8070 Ingolstadt (DE)**

## Beschreibung

Die Erfindung bezieht sich auf ein Gleitstück für Fensterführungen von Kraftfahrzeugen gemäß dem Oberbegriff des Patentanspruches 1 und demjenigen z.B. nach der EP-A-0131959 gattungsgemäß ausgebildet ist.

Derartige Gleitstücke werden meist eingesetzt, um Fensterscheiben zu führen, welche im wesentlichen bündig mit den umgebenden Karosserieteilen abschließen, wodurch Windgeräusche reduziert und ein günstiger Luftwiderstandsbeiwert erreicht wird.

Die bekannten Gleitstücke sind meist als Rotationskörper ausgebildet und an ihrer der Fensterscheibe zugewandten Seite mit einer Gewindebohrung versehen. In diese Gewindebohrung wird ein Schraubelement eingedreht, welches durch eine entsprechende Aussparung in der Fensterscheibe hindurchgeführt ist und der Befestigung des Gleitstückes an der Scheibe dient.

Aus baulichen Gründen muß der Halteabschnitt des Gleitstückes, also derjenige Abschnitt, der die Gewindebohrung aufnimmt, meist sehr flach bemessen sein. Auch der sich an den Halteabschnitt anschließende Steg des Gleitstückes sollte nicht zu breit ausgeführt sein, da ansonsten ein entsprechend breiter Schlitz in der das Gleitstück aufnehmenden Führungsschiene notwendig ist. Diese beiden Forderungen haben zur Folge, daß aufgrund der Gewindebohrung das Gleitstück im Übergangsbereich vom Halteabschnitt zum Steg sehr geschwächt ist. Um trotzdem ein Brechen des Gleitstückes in diesem Bereich auszuschließen, werden hochfeste und dadurch teuere Stähle für das Gleitstück eingesetzt.

Der Erfindung liegt die Aufgabe zugrunde, ein Gleitstück gemäß dem Oberbegriff des Anspruches 1 so weiterzubilden, daß bei gleich guter oder verbesserter Festigkeit des Gleitstückes die Verwendung von hochfesten Stahl vermieden wird. Außerdem sollen durch den Einsatz des Gleitstückes keine baulichen Veränderungen in bezug auf die Führungsschiene oder die Ausgestaltung der umgebenden Bauteile notwendig sein.

Die Aufgabe wird durch die kennzeichnenden Merkmale des Patentanpruches 1 gelöst.

Durch den länglichen Querschnitt des Steges läßt sich auch bei Einsatz eines weniger festen Materials die gleiche oder sogar eine verbesserte Bruchfestigkeit erreichen. Von großem Vorteil ist dabei, daß durch die neue Ausgestaltung trotzdem keine Änderung des herkömmlichen Aufbaus notwendig ist. Die vorgeschlagenen Gleitstücke könnten also sogar in den herkömmlichen Fensterführungen ohne irgendwelche Änderungen eingesetzt werden.

Das vorgeschlagene Gleitstück kann zweckmäßig aus einem geeigneten Kunststoff hergestellt sein. Durch den Einsatz des Kunststoffes ist es in einfacher Weise möglich, den länglichen Querschnitt zu realisieren.

Anspruch 2 kennzeichnet eine bauliche Ausgestaltung des Gleitstückes, bei der der Gleitabschnitt und der Halteabschnitt des Gleitstückes von zu einer gemeinsamen Achse konzentrischer Form sind und der Querschnitt des dazu symmetrisch angeordneten Steges eine Längserstreckung aufweist, welche in etwa den Durchmessern dieser Abschnitte entspricht. Ein solches Gleitstück läßt sich sehr einfach herstellen und darüberhinaus auch in zwei 180 Grad zueinander versetzten Positionen montieren.

Es ist natürlich auch möglich, eine asymmetrische Anordnung des Steges vorzunehmen. In gleicher Weise kann der Steg auch auf einer Seite in Richtung senkrecht zu dem Schlitz in der Führungsschiene verstärkt ausgeführt sein, wenn es die baulichen Gegebenheiten dort zulassen. Derartige Anpassungen lassen sich in einfacher Weise ralisieren, wenn das Gleitstück aus einem Kunststoff oder Metall in einem Spritz- oder Gießverfahren hergestellt wird.

Wenn das Gleitstück nicht als Rotationskörper, sondern als Formkörper mit einem länglichen Stegquerschnitt nach einem der genannten Verfahren hergestellt wird, dann kann gemäß einer vorteilhaften Ausgestaltung der Erfindung nicht nur die Festigkeitseigenschaft des Gleitstückes verbessert werden, sondern auch deren Führungseigenschaften in der Führungsschiene.

Dazu wird gemäß dem Patentanspruch 3 vorgeschlagen, daß der Gleitabschnitt im wesentlichem von quaderförmiger Gestalt ist und bei montiertem Gleitstück die längeren Seiten des Quaders parallel zur Führungsschiene verlaufen. Dadurch wird eine vergrößerte Basis und eine geringere Zug-/Druckbelastung in der Führung geschaffen.

Genauso wie der Gleitabschnitt des Gleitstückes vergrößert und dadurch verbessert werden kann, ist es auch möglich, den Halteabschnitt des Gleitstückes entsprechend den jeweiligen Anforderungen zu vergrößern. Damit kann nicht nur eine durch die Gewindebohrung hervorgerufene Bruchgefahr vermindert werden, sondern es läßt sich auch —falls eine andere Befestigungstechnik für das Gleitstück an der Fensterscheibe gewünscht ist— eine größere Klebefläche erzielen.

Wenn das Gleitstück mit der Fensterscheibe durch Klebung verbunden werden soll, dann ist es besonders vorteilhaft, wenn der der Glasscheibe zugewandte Bereich des Halteabschnittes keramischen Werkstoff enthält. Durch die Verwendung von keramischen Werkstoff im Bereich der Klebefläche wird eine Materialpaarung geschaffen, bei der jedes Material etwa den gleichen Wärmeausdehnungskoeffizienten aufweist. Schubspannungen, wie sie bei der Verklebung von Materialien mit stark unterschiedlichen Wärmeausdehnungskoeffizien-

2

ten auftreten können, werden somit vermieden und eine hoch belastbare und dauerhafte Befestigung des Gleitstückes auf der Glasscheibe geschaffen. Der keramische Werkstoff kann beispielsweise auf den Halteabschnitt des Gleitstückes aufgespritzt sein oder durch ein eingelegtes Plättchen gebildet werden. Ein solches Plättchen kann die unterschiedlichste Form aufweisen und wird zweckmäßig gleich bei der Herstellung des Gleitstückes eingebracht.

Wenn die Verwendung eines keramischen Formteiles zur Erzielung einer bruchfesten Klebung bevorzugt wird, dann ist es vorteilhaft, wenn man dieses Formteil zumindest teilweise oder gar vollständig als Gleitstück ausbildet. Dadurch wird in einem Arbeitsgang sowohl die Voraussetzung für eine gute Verklebbarkeit als auch ein festigkeitsmäßig optimiertes Gleitstück geschaffen.

Es kann aber beispielsweise auch nur der Halteabschnitt und der Steg einstückig aus keramischen Werkstoff bestehen. Dieser Formkörper kann in den Gleitabschnitt hineinragen und der Gleitabschnitt durch Ummantelung des einragenden Teiles gebildet sein.

Mehrere Ausführungsbeispiele der Erfindung sind in der Zeichnung dargestellt. Es zeigt

Fig. 1   einen Schnitt durch eine Führungsschiene mit einem darin aufgenommenen Gleitstück,
Fig. 2   das Gleitstück aus Fig. 1 in Seitenansicht,
Fig. 3   ein weiteres Gleitstück, welches durch Klebung befestigbar ist,
Fig. 4   in Seitenansicht das geschnittene Gleitstück aus Fig. 3,
Fig. 5   ein weiteres Gleitstück, bei dem sein Halteteil und sein Steg aus keramischen Werkstoff besteht,
Fig. 6   in Seitenansicht und geschnitten das Gleitstück aus Fig. 5,
Fig. 7   ein Gleitstück, welches vorteilhaft bei der Führungsschiene gemäß Fig. 1 einsetzbar ist,
Fig. 8   ein Gleitstück mit einem verbreiterten Gleitabschnitt,
Fig. 9   ein Gleitstück, dessen Halteteil einen Einsatz aus keramischen Werkstoff aufweist,
Fig. 10  das Gleitstück aus Fig. 9 in Seitenansicht und im Schnitt,
Fig. 11  den keramischen Einsatz aus Fig. 10 in Seitenansicht,
Fig. 12  den keramischen Einsatz aus Fig. 10 in Draufsicht,
Fig. 13  den keramischen Einsatz aus Fig. 13 in perspektivischer Darstellung,
Fig. 14  ein weiteres Gleitstück, bei dem der Halteabschnitt asymmetrisch ausgebildet ist und
Fig. 15  eine Draufsicht auf das Gleitstück gemäß Fig. 14.

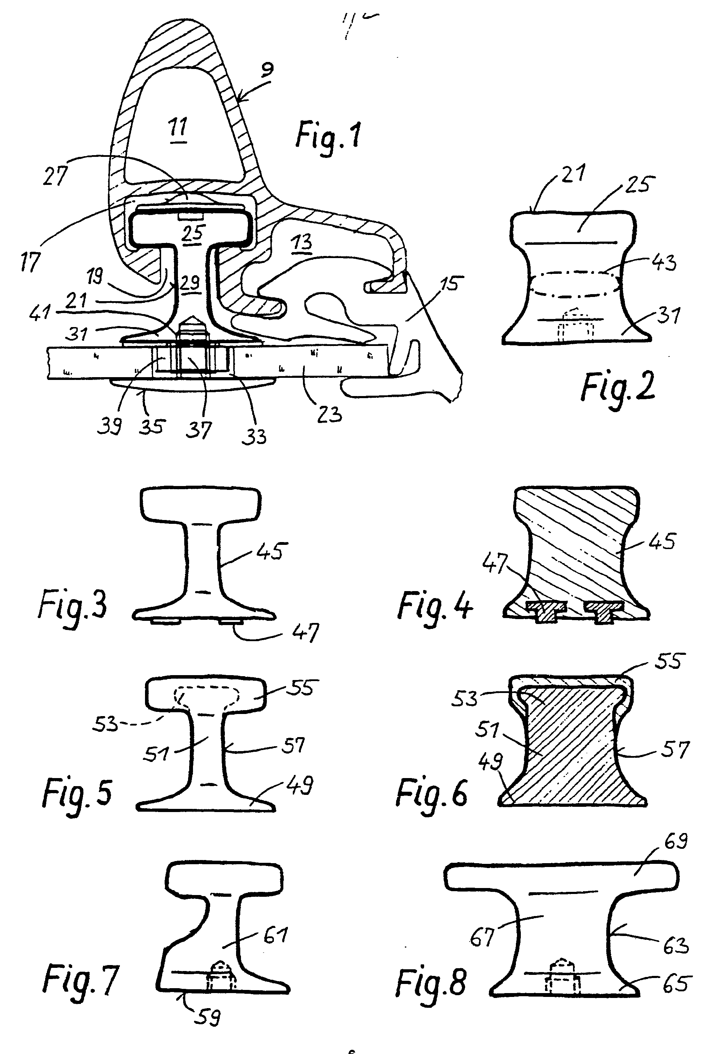

Eine in Fig. 1 im Schnitt dargestellte Führungsschiene (9) ist durch ein Leichtmetall-Strangpreßprofil gebildet. Es umfaßt einen Hohlraum (11), einen Aufnahmequerschnitt (13) für eine Dichtung (15) und einen Führungskanal (17), welcher durch einen Schlitz (19) von außen zugänglich ist.

Der Führungskanal (17) ist zur Aufnahme eines Gleitstückes (21) ausgebildet, welches eine Scheibe (23) trägt. Das Gleitstück (21) ist mit seinem Gleitabschnitt (25) längsverschieblich in dem Führungskanal (17) der Führungsschiene (9) geführt. Der Gleitabschnitt (25) weist einen kreisrunden Querschnitt auf und ist an seiner Stirnseite mit einem Distanzteil (27) versehen. Dieses Distanzteil (27) sorgt für einen gleichbleibenden Anpreßdruck des Gleitabschnittes (25) an dem Führungskanal (17) und gleicht Toleranzen aus, wodurch eventuell auftretende Axialbewegungen und damit Klappergeräusche vermieden werden.

An den Gleitabschnitt (25) schließt sich in Richtung auf die Scheibe (23) zu ein Steg (29) an, welcher in einen kegelförmigen Halteabschnitt (31) des Gleitstückes (21) mündet.

Zur Befestigung des Gleitstückes (21) an der Scheibe (23) ist letztere mit einem Durchbruch (33) versehen, durch den ein sich an der Scheibenaußenseite abstüztendes Schraubelement (35) hindurchgeführt ist. Auf den Gewindeabschnitt (37) des Schraubelementes (35) ist ein verformbares Zentrierelement (39) aufgeschoben. Wie Fig. 1 zeigt, ist das Schraubelement (35) in eine Gewindebohrung (41) im Halteabschnitt (31) des Gleitstückes (21) eingedreht.

Während der Gleitabschnitt (25) und der Halteabschnitt (31) des Gleitstückes (21) einen kreisrunden Querschnitt aufweisen, ist der Steg (29) von länglicher Gestalt, wie dies in Fig. 2 durch die strichpunktierte Linie (43) zu erkennen ist. Die letztgenannte Ausgestaltung ergibt gegenüber einem kreisrunden Stegquerschnitt eine wesentlich höhere Zug-/Druck- und Biegefestigkeit. Außerdem wird der kritische Übergangsbereich vom Halteabschnitt (31) zum Steg (29) verstärkt und die Bruchgefahr an dieser Stelle reduziert.

Ein in den Figuren 3 und 4 dargestelltes Ausführungsbeispiel zeigt ein Gleitstück (45), welches in seinen äußeren Abmessungen denjenigen gemäß der Figuren 1 und 2 entspricht. Dieses Gleitstück (45) wird im Gegensatz zu dem vorbeschriebenen Gleitstück nicht durch ein Schraubelement an der Scheibe (23) befestigt, sondern durch Klebung. Da das Gleitstück (45) aus Kunststoff besteht wäre durch das direkte Verkleben mit der Scheibe (23) eine Materialpaarung mit sehr unterschiedlichen Wärmeausdehnungskoeffizienten gegeben. Die große Differenz in den Wärmeausdehnungskoeffizienten hätte zur Folge, daß sich bei Temperaturänderungen Schubspannungen in der Klebeverbindung aufbauen, welche die Verbindung stark belasten.

In dem Ausführungsbeispiel gemäß den Figuren 3 und 4 ist deshalb ein kreisringförmiges Plättchen (47) aus keramischem Werkstoff in das Gleitstück (45) bei dessen Herstellung eingebracht worden. Wird nunmehr das Plättchen (47) mit der Glasscheibe (23) verklebt, dann liegen annähernd gleiche Wärmeausdehnungskoeffizienten vor, was Vorraussetzung für eine gute Verklebung ist. Wie aus der Zeichnung ersichtlich ist, steht das Plättchen (47) gegenüber dem Halteabschnitt des Gleitstückes (45) vor. Dadurch wird erreicht, daß — hervorgerufen durch die unterschiedlichen Ausdehnungskoeffizienten von Gleitstück und Plättchen — keine Verspannung der Klebeverbindung senkrecht zur Klebefläche auftritt.

Bei den Ausführungsformen gemäß der Figuren 5 und 6 ist nicht nur ein Plättchen in das Gleitstück eingelegt, sondern das Halteteil (49) und der Steg (51) einstückig aus keramischem Werkstoff hergestellt. Wie die Schnittsdarstellung in Fig. 6 zeigt, ist an den Steg (51) ein Fortsatz (53) angeformt, welcher in den Gleitabschnitt (55) des Gleitstückes (57) hineinragt. Der Gleitabschnitt (55) ist durch Umspritzen des Fortsatzes (53) mit einem gleitfähigen Material hergestellt.

Ein in Fig. 7 dargestelltes Gleitstück (59) ist — genauso wie die vorher beschriebenen Gleitstücke — zur Aufnahme in der Führungsschiene nach Fig. 1 ausgebildet. Der Steg (61) ist jedoch nicht nur wie bei den vorbeschriebenen Varianten in Richtung der Längserstreckung der Führungsschiene vergrößert, sondern auch noch einseitig in einer Richtung senkrecht dazu. Diese zusätzliche Verstärkung ist möglich, da bei der gegebenen Führungsschiene die platzkritische Stelle nur auf der der Dichtung (15) zugewandten Seite des Gleitstückes (59) besteht. Die beschriebene Verstärkung läßt sich ohne großen Aufwand realisieren, da das Gleitstück (59) aus Kunststoff bestehen soll.

Die gegenüber Stahl geringere Festigkeit des Kunststoffes wird durch die Verstärkungen ausgeglichen. Trotzdem läßt sich das Gleitstück (59) in der in Fig. 1 dargestellten Führungsschiene einsetzen. Durch die vorgeschlagenen neuen Gleitstücke sind also keine Änderungen der bisherigen Konstruktion notwendig.

Schließlich zeigt Fig. 8 ein Gleitstück 63, dessen Halteteil (65) und Steg (67) nach einer der vorbeschriebenen Bauformen ausgestaltet sein kann. Der Gleitabschnitt (69) ist — im Gegensatz zu den anderen Bauformen — nicht zylindrisch, sondern quaderförmig. Dadurch wird eine verbesserte Führung des Gleitstückes (63) in der Führungsschiene erreicht. Wenn die Breite des Gleitabschnittes (69) auf die Breite des Führungskanales (17) in der Führungsschiene (9) abgestimmt ist, dann läßt sich dieses Gleitstück (63) bei verbesserten Festigkeits- und Gleiteigenschaften auch in der Führungsschiene nach Fig. 1 einsetzen.

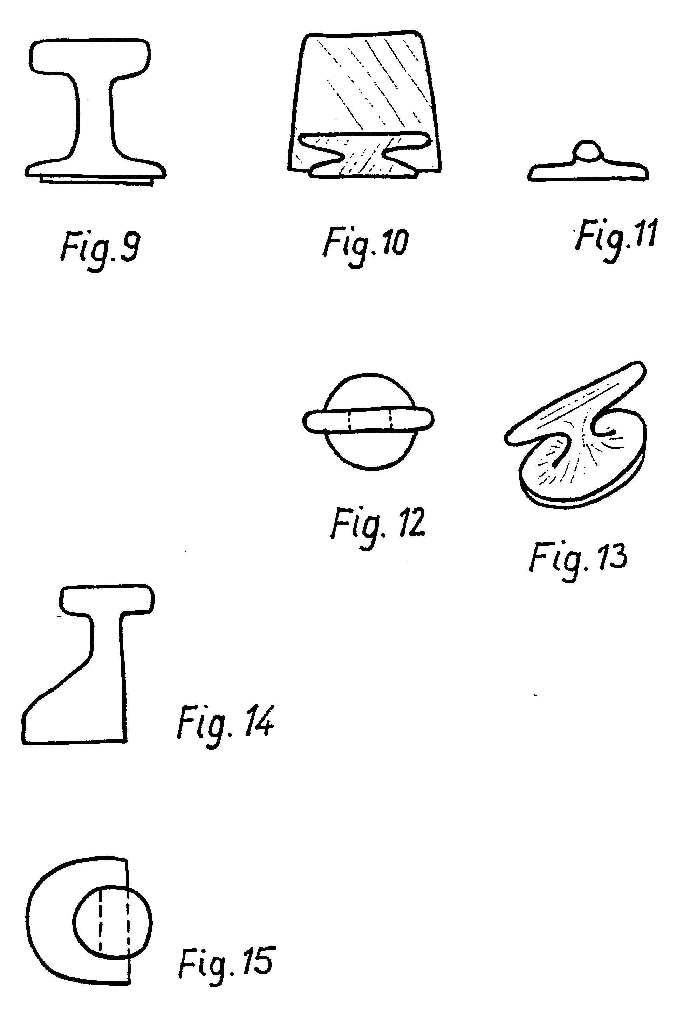

Die Figuren 9 und 10 zeigen ein Gleitstück, dessen Halteteil einen keramischen Einsatz aufnimmt. Der in den Figuren 11-13 näher dargestellte keramische Einsatz weist die Form eines Amboßes auf.

Schließlich zeigen die Figuren 14 und 15 eine Bauform eines Gleitstückes, bei dem das Halteteil asymmetrisch und versetzt zum Gleitabschnitt ausgebildet ist. Dadurch wird die Festigkeit erhöht und eine verbesserte Verankerung eines gegebenenfalls eingefügten keramischen Einsatzes möglich.

## Patentansprüche

1. Gleistück (21, 45, 57, 63) für Fensterführungen von Kraftfahrzeugen, welches einen verbreiterten, zur Aufnahme in einer Führungsschiene (9) ausgebildeten Gleitabschnitt (25, 55, 69), einen verbreiterten Halteabschnitt (31, 49, 65) zur Befestigung des Gleitstückes an einer Glasscheibe (23) und einen beide Abschnitte verbindenden Steg (29, 51, 61, 67) aufweist, welcher bei in der Führungsschiene (9) aufgenommenen Gleistück durch einen Schlitz (19) der Führungsschiene hindurchtritt, **dadurch gekennzeichnet,** daß der Steg (29, 51, 61, 67) einen länglichen Querschnitt aufweist, dessen Breite an die lichte Weite des Schlitzes (19) angepaßt ist.

2. Gleitstück nach Anspruch 1, **dadurch gekennzeichnet,** daß der Gleitabschnitt (25, 55) und der Halteabschnitt (31, 49) von zu einer gemeinsamen Achse konzentrischer Form sind und der Querschnitt des dazu symmetrisch angeordneten Steges (29, 51) eine Längserstreckung aufweist, welche in etwa den Durchmessern dieser Abschnitte entspricht.

3. Gleistück nach einem der Ansprüche 1 oder 2, **dadurch gekennzeichnet,** daß der Gleitabschnitt (69) im wesentlichen von quaderförmiger Gestalt ist und bei montiertem Gleitstück (63) die längeren Seiten des Quaders parallel zur Führungsschiene (9) verlaufen.

4. Gleitstück nach einem der Ansprüche 1 bis 3, **dadurch gekennzeichnet,** daß das Gleitstück (21, 45, 59, 63) aus Kunststoff besteht.

5. Gleitstück nach einem der Ansprüche 1 bis 4, **dadurch gekennzeichnet,** daß der der Glasscheibe (23) zugewandte Bereich des Halteabschnittes (49) keramischen Werkstoff enthält.

6. Gleitstück nach Anspruch 5, **dadurch gekennzeichnet,** daß der Halteabschnitt (49) und der Steg (51) einstückig aus keramischen Werkstoff bestehen.

7. Gleitstück nach Anspruch 6, **dadurch gekennzeichnet,** daß der aus kermischen Werkstoff bestehende Steg (51) in den Gleitabschnitt (55) einragt, welcher durch Ummantelung des einragendes Teiles gebildet ist.

## Claims

1. Sliding element (21, 45, 59, 63) for window guides of motor vehicles, which has a widened sliding portion (25, 55, 69) constructed to be accommodated in a guide bar (9), a widened holding portion (31, 49, 65) for securing the sliding element on a glass pane (23), and a web (29, 51, 61, 67) which connects the two portions and which, when the sliding element is accommodated in the guide bar (9), projects through a slot (19) in the guide bar, characterised in that the web (29, 51, 61, 67) has an elongated cross-section the width of which is adapted to the internal clear width of the slot (19).

2. Sliding element according to claim 1, characterised in that the sliding portion (25, 55) and the holding portion (31, 49) are concentric in form with respect to a common axis, and the cross-section of the web (29, 51), which is situated symmetrically thereto, has a longitudinal extent which corresponds approximately to the diameters of these portions.

3. Sliding element according to one of claims 1 or 2, characterised in that the sliding portion (69) is of substantially parallelepipedic form, and, when the sliding element (63) is fitted in position, the longer sides of the parallelepiped extend parallel to the guide bar (9).

4. Sliding element according to one of claims 1 to 3, characterised in that the sliding element (21, 45, 59, 63) is made of synthetic plastic material.

5. Sliding element according to one of claims 1 to 4, characterised in that that region of the holding portion (49) which faces towards the glass pane (23) contains ceramic material.

6. Sliding element according to claim 5, characterised in that the holding portion (49) and the web (51) are made in one piece of ceramic material.

7. Sliding element according to claim 6, characterised in that the web (51) made of ceramic material projects into the sliding portion (55), which is formed by coating or sheathing the projecting region.

## Revendications

1. Pièce coulissante (21, 45, 57, 63) pour coulisses latérales de fenêtre de véhicules automobiles, comportant un segment coulissant élargi (25, 55, 69) réalisé en vue de son logement dans une glissière-guide (9), un segment d'assujettissement élargi (31, 49, 65) pour la fixation de la pièce coulissante à une vitre (23) et une âme (29, 51, 61, 67) qui relie ces deux segments et qui passe à travers une fente (19) de la glissière-guide (9) lorsque la pièce coulissante est reçue dans cette glissière-guide, caractérisée en ce que l'âme (29, 51, 61, 67) présente une section transversale de forme allongée, dont la largeur est adaptée à la largeur d'ouverture de la fente (19).

2. Pièce coulissante selon la revendication 1, caractérisée en ce que le segment coulissant (25, 55) et le segment d'assujettissement (31, 49) ont une forme concentrique par rapport à un axe commun, et en ce que la section transversale de l'âme (29, 51), symétrique par rapport à cet axe, présente une étendue en longueur qui correspond à peu près aux diamètres de ces segments.

3. Pièce coulissante selon la revendication 1 ou 2, caractérisée en ce que le segment coulissant (69) a une forme pratiquement parallélépipédique, les grands côtés du parallélépipéde s'étendant parallèlement à la glissière-guide (9) lorsque la pièce coulissante (63) est montée.

4. Pièce coulissante selon l'une quelconque des revendications 1 à 3, caractérisée en ce que la pièce coulissante (21, 45, 59, 63) est en matière plastique.

5. Pièce coulissante selon l'une quelconque des revendications 1 à 4, caractérisée en ce que la région du segment d'assujettissement (49) située du côté de la vitre (23) contient une matière céramique.

6. Pièce coulissante selon la revendication 5, caractérisée en ce que le segment d'assujettissement (49) et l'âme (51) sont faits d'une seule pièce en matière céramique.

7. Pièce coulissante selon la revendication 6, caractérisée en ce que l'âme (51), faite de matière céramique, pénètre dans le segment coulissant (55) qui est formée par enrobage de la partie pénétrante.

Fig.1

Fig.2

Fig.3

Fig.4

Fig.5

Fig.6

Fig.7

Fig.8

Fig.9

Fig.10

Fig.11

Fig. 12

Fig. 13

Fig. 14

Fig. 15